(19) Europäisches Patentamt
European Patent Office
Office européen des brevets

(11) **EP 4 737 139 A1**

(12) **EUROPEAN PATENT APPLICATION**
published in accordance with Art. 153(4) EPC

(43) Date of publication:
06.05.2026 Bulletin 2026/19

(21) Application number: 24832463.4

(22) Date of filing: 27.06.2024

(51) International Patent Classification (IPC):
*B60C 23/04* (2006.01)     *H04B 1/3822* (2015.01)
*G06K 19/077* (2006.01)     *H01Q 1/22* (2006.01)
*H01Q 1/40* (2006.01)     *H02J 50/10* (2016.01)

(52) Cooperative Patent Classification (CPC):
B60C 23/04; G06K 19/077; H01Q 1/22; H01Q 1/40;
H02J 50/10; H04B 1/3822

(86) International application number:
PCT/KR2024/008977

(87) International publication number:
WO 2025/005685 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023  KR 20230082956
09.01.2024  KR 20240003365
18.01.2024  KR 20240007729
16.02.2024  KR 20240022216

(71) Applicant: HANKOOK TIRE & TECHNOLOGY CO.,
LTD
Gyeonggi-do 13494 (KR)

(72) Inventors:
• SO, Soon-Hong
Daejeon 34127 (KR)
• LEE, Sunmi
Daejeon 34127 (KR)

(74) Representative: Zimmermann, Tankred Klaus
Schoppe, Zimmermann, Stöckeler
Zinkler, Schenk & Partner mbB
Patentanwälte
Radlkoferstrasse 2
81373 München (DE)

(54) **TIRE INCLUDING ELECTRONIC DEVICE, AND INFORMATION COLLECTION SYSTEM FOR VEHICLE TIRE**

(57) The present invention relates to an information collection system for a vehicle tire and, more specifically, to an information collection system for a vehicle tire, which may wirelessly collect information from a tire. The present invention provides the information collection system for a vehicle tire, the information collection system comprising: a tire internal installed device(200) installed inside a tire(100) and comprising a sensor module(210) for collecting information of the tire and a transmission module(220) for transmitting the information collected from the sensor module(210); and a reception unit(300) for receiving a signal from a transmission unit(220) of the tire internal installed device(200), wherein a transmission frequency of the transmission module(220) is set 1.2 to 2 times higher than a frequency being measured by the reception unit(300).

Fig. 1

EP 4 737 139 A1

**Description**

**[TECHNICAL FIELD]**

The present invention relates to a tire including an electronic device and an information collection system for vehicle tires capable of wirelessly collecting information from the tire, wherein the electronic device ensures accurate information transmission by matching the target receiving frequency with the actual receiving frequency.

**[BACKGROUND ART]**

With the recent increase in technological development for connected vehicles and autonomous vehicles, RFID tires, electronic tires, and intelligent tires, which attach or embed electronic devices within the tire, are being developed and sold.

These intelligent tires are designed to measure tire-related information, process the measured data, and deliver the information to the user.

Various wireless transmission methods are used to enable this information delivery.

An intelligent tire monitoring system is a technology that enhances vehicle safety by equipping tires with chips or sensors to monitor tire condition and then relaying this tire status information to the driver in real time. This intelligent tire monitoring system communicates with various safety devices in the vehicle, intended for the safety of the driver and passengers, providing tire monitoring data to these various safety devices.

Furthermore, tires equipped with RFID tags contain a chip storing various tire history information and an antenna for wireless communication with a reader. This chip stores unique tire information such as the manufacturing date, manufacturer, and product number, as well as the entire logistics information from tire production to sale, which is stored and updated.

Information from the reader is stored and updated in the chip via the antenna, and information stored in the chip is transmitted to the reader via the antenna. Hereinafter, related prior art documents are described, and identification symbols in the prior art documents are unrelated to the present invention.

Korean Patent No. 10-1500213 'Intelligent Tire System' is a bearing assembly configured to wrap around the wheel rim; and a sensor module configured to constantly sense the inner surface of the tire contacting the ground, installed to rotate relative to the wheel rim by the bearing assembly. a sensor module configured to constantly sense the inner surface of the tire contacting the ground by being installed to rotate relative to the wheel rim via the bearing assembly; wherein a light source is installed on the side of the sensor module; and configured to illuminate the inner surface of the tire contacting the ground via the light source.

Korean Registered Patent No. 10-1435409 'RFID Tag for Tires' relates to an RFID tag for tires that prevents damage or unreadability of the tire mounted RFID tag due to internal/external interference during tire operation, and maintains tire information attached to the tire without the RFID tag detaching until the end of the tire's life. The RFID tag comprises a substrate elongated in the longitudinal direction, an RFID chip and antenna installed on the upper surface of the substrate, and an attachment portion arranged on the lower surface of the substrate for attachment to the inner wall surface of the tire, wherein the attachment portion is located only on a portion of the rear surface area of the RFID tag.

However, the technologies of Patent No. 10-1500213 and Patent No. 10-1435409 had the problem of not being able to easily adjust the distance between transmission and reception.

Meanwhile, electronic devices installed in intelligent tires are designed with electronic chips and antennas according to the desired frequency and recognition distance of each consumer, and can acquire information transmitted at various frequencies depending on the circuit design of the receiving end.

Typically, the transmission frequency considers the dielectric constant of air; however, since air has a dielectric constant practically equal to 1, it is generally designed so that there is no difference between the transmission and reception frequencies.

However, depending on the installation location of the electronic device, the compound, tire structure, sidewall thickness, and air layer conditions vary, and the permittivity also changes with these conditions.

These changes in permittivity cause the transmission frequency to modulate, leading to a problem where the accuracy of the information deteriorates.

Therefore, conventionally, the transmission frequency was designed higher to ensure accurate data transmission. However, since it was impossible to determine precisely how much higher the transmission frequency should be designed, there was a problem of reduced information reliability.

<Prior Arts>

2

(Patent Document) Korean Patent No. 10-1500213

(Patent Document) Korean Patent No. 10-1435409

(Patent Document) U.S. Patent No. 7,319,380

[DETAILED DESCRIPTION OF THE INVENTION]

[TECHNICAL PROBLEM]

The technical problem to be solved by the present invention is to provide an information collection system for vehicle tires that wirelessly transmits information within the tire and includes an electronic device designed with a transmission frequency considering the tire's radio frequency constant, thereby ensuring accurate information transmission by matching the target receiving frequency with the actual received reception frequency. This system aims to provide an optimal recognition distance according to the required application.
The technical problems addressed by the present invention are not limited to those described above and further include other problems that may be understood by a person skilled in the art from the descriptions of this specification.

[SOLUTION TO PROBLEM]

An embodiment of the present invention for achieving the above objectives comprises: an electronic device provided inside the tire; and a receiver provided outside the tire. The transmission frequency of the electronic device and the receiver is designed such that the receiving frequency becomes the target receiving frequency, and the transmission frequency is designed to be greater than the target receiving frequency.
Another embodiment of the present invention relates to an information collection system for vehicle tires, comprising: a tire internal installed device inside the tire, comprising a sensor module for collecting tire information and a transmission module for transmitting information collected from the sensor module; a receiver for receiving signals from the transmitting unit of the tire internal installed device; and wherein the transmission frequency of the transmitting module is set to be 1.2 to 2 times higher than the frequency measured by the receiver.
Another embodiment of the present invention relates to a tire including an electronic device, wherein the electronic device has a first point where the bead wire and bead wire rubber meet, a second point where at the end of the bead filler, and a third point where at the end of the carcass and belt, the electronic device is positioned between the first point and the second point or between the second point and the third point, and the electronic device is designed with a transmission frequency that varies as a radio frequency constant of the tire.
Another embodiment of the present invention comprises: a step of calculating the tire radio frequency constant(TRFC) inside the tire; a step of deriving a mounting position where the tire radio frequency constant is minimized within the tire; a step of designing the electronic device by applying the tire radio frequency constant at the mounting position; and a step of arranging the designed electronic device at the mounting position; thereby providing a tire manufacturing method including an electronic device.

[ADVANTAGEOUS EFFECTS OF INVENTION]

According to an embodiment of the present invention following the above configuration, since the transmission frequency of the electronic device is designed considering the tire radio frequency constant reflecting the permittivity based on the desired reading location, tire structure, material, etc., an optimal recognition distance can be provided. Furthermore, as the receiving frequency value falls within the error range of the target receiving frequency, the information is not distorted, and the reliability of the information can be improved.
Furthermore, the vehicle tire information collection system provides an optimal recognition distance effect when applying the internal tire installed device installed within the tire, based on the dielectric constant due to the tire material, the position of the receiver, and the tire structure.
The effects of the present invention are not limited to the above effects and should be understood to include all effects inferable from the detailed description of the invention or the configuration of the invention described in the claims.

[BRIEF DESCRIPTION OF THE DRAWINGS]

Fig 1 shows an embodiment of the tire internal installed device of the information collection system for vehicle tires according to the present invention, installed at a position inside the tire corresponding to the tread portion.

Fig 2 shows an embodiment of the tire internal installed device of the information collection system for a vehicle tire according to the present invention, installed at an inner position of the tire corresponding to the sidewall portion.

Fig 3 shows an embodiment where the tire internal installed device is inserted into and installed within a pocket of the inner liner.

Fig 4 is a schematic diagram illustrating the configuration of one embodiment of the tire internal installed device.

Fig 5 shows the installation position of an electronic device installed on the sidewall.

Fig 6 shows a test results measuring frequency shift in an embodiment where an antenna is attached to the tire and in an embodiment where rubber topping is applied after attachment.

Figs 7 and 8 show the first point and second point of a tire including an electronic device according to an embodiment of the present invention.

Figs 9 and 10 show the first point, second point, and third point of a tire containing an electronic device according to an embodiment of the present invention.

Fig 11 shows a diagram showing the attachment position of the electronic device in a tire according to an embodiment of the present invention.

Fig 12 shows a flowchart of the transmission frequency design method for a tire including an electronic device according to an embodiment of the present invention.

Fig 13 shows a tire including an electronic device according to an embodiment of the present invention.

Fig 14 shows a diagram of an electronic device according to an embodiment of the present invention.

Fig 15 shows a flowchart a manufacturing method for a tire including an electronic device according to an embodiment of the present invention.

## [BEST MODE]

The most preferred embodiment of the present invention relates to an information collection system for vehicle tires comprising a sensor module(210) installed inside the tire(100) to collect tire information, and a transmission module(220) for transmitting information collected from the sensor module(210); a reception unit(300) for receiving signals from the transmitting unit(220) of the tire internal installed device(200); and is characterized in that the transmission frequency of the transmitting module(220) is set to be 1.2 to 2 times higher than the frequency measured by the reception unit(300).

## [DESCRIPTION OF EMBODIMENTS]

Hereinafter, the present invention is described with reference to the accompanying drawings. However, the present invention may be modified in various different ways and is not limited to the embodiments described herein. Further, in the accompanying drawings, components irrelevant to the description will be omitted in order to clearly describe the present invention, and similar reference numerals will be used to describe similar components throughout the specification.

Throughout the specification, when an element is referred to as being "connected with(coupled to, combined with, in contact with)" another element, it may be "directly connected" to the other element and may also be "indirectly connected" to the other element with another element intervening therebetween. Further, unless explicitly described otherwise, "comprising" any components will be understood to imply the inclusion of other components rather than the exclusion of any other components.

Terms used in the present invention are used only in order to describe specific exemplary examples rather than limiting the present invention. Singular forms are intended to include plural forms unless the context clearly indicates otherwise. It will be further understood that the terms "comprise" or "have" used in this specification specify the presence of stated features, numerals, steps, operations, components, parts, or a combination thereof, but do not preclude the presence or addition of one or more other features, numerals, steps, operations, components, parts, or a combination thereof.

Terms '~er', '~unit', '~module', etc. used herein mean the units for processing at least one function or operation and may be implemented by hardware, software, or a combination of hardware and software.

Further, in the specification, when a step is positioned "before" or "after" another step, this includes the same right as not only when the step and another step are in a direct time-serial relationship, but when they are in an indirect time-serial relationship in which the orders of the two steps may be time-serially changed such as mixing of the steps after the steps.

Hereinafter, examples of the present invention are described in detail with reference to the accompanying drawings.

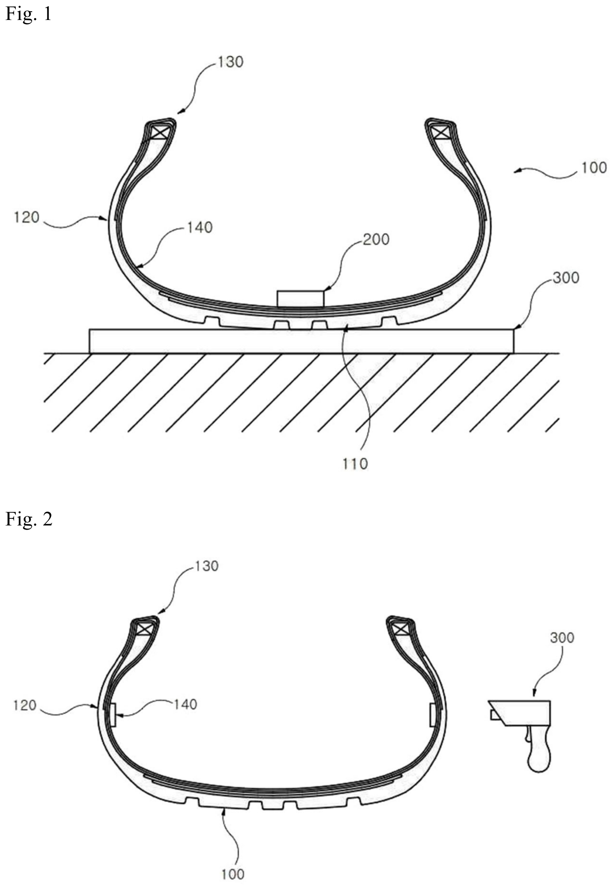

Fig 1 shows an embodiment of the tire internal installed device of the information collection system for vehicle tires according to the present invention, installed at a position inside the tire corresponding to the tread portion, and Fig 2 shows an embodiment of the tire internal installed device of the information collection system for a vehicle tire according to the present invention, installed at an inner position of the tire corresponding to the sidewall portion.

wherein

As illustrated in Figs 1 to 2, the present invention relates to an information collection system for a vehicle tire, a tire internal installed device(200) installed inside the tire(100), comprising a sensor module(210) to collect tire information and a transmission module(220) to transmit the collected information from the sensor module(210); and a receiver (300) for receiving signals from the transmitting unit(220) of the tire internal installed device(200);and provides an information collection system for vehicle tires, wherein the transmission frequency of the transmission module(220) is set to be 1.2 to 2 times higher than the frequency measured by the receiver(300).

The tire internal installed device(200) is an electronic device including a transmission module(220) equipped with an antenna, which transmits collected information from the sensor module(210) or information such as the tire's manufacturing date and product number to an external receiver(300). The recognition range of the radio waves transmitted by the transmission module(220) must be limited. If it is excessively long, it may not be distinguishable from signals from other tires, and if it is excessively short, it causes the receiver unit(300) to need to be excessively close.

The tire internal installed device(200) is designed with a chip and antenna selected based on the frequency and detection range. Depending on the circuit design of the receiver, it can acquire transmitted information at various frequencies. Once the receiver frequency is determined, the transmitter transmits information by adjusting the transmission frequency through amplitude or frequency modulation. Furthermore, the recognition distance of radio waves is also affected by the surrounding dielectric constant. The tire's dielectric constant varies depending on the tire compound, tire structure, tire thickness, and air layer. Considering the tire's dielectric constant, it is desirable to set the transmission frequency of the transmission module(220) to be 1.2 to 2 times higher than the frequency measured by the receiver(300) to readily limit the detection distance to between 0.1 mm and 1,500 mm.

As one embodiment, to achieve a recognition distance of 1 to 550 mm, the transmission frequency is preferably 150 to 270 kHz, and the receiving frequency is preferably 125 to 135 kHz.

In the embodiment of Fig 1, the tire internal installed device(200) is installed on the inner side corresponding to the tread portion(110) of the tire(100), and the receiver(300) is configured as a plate-shaped structure that allows the tire to run upward on the ground surface over which the tire travels. The receiver(300) receives information collected from the sensor module(210) or information such as the tire's manufacturing date and product number when the tire is positioned on its upper surface. Alternatively, when the tire passes over the receiver, applications such as fee payment or passage authorization verification are able to possible.

In the embodiment of Fig 2, the tire internal installed device(200) provides a configuration installed on the inner surface corresponding to both sidewall portions(120) of the tire(100). This configuration can be applied when the receiver (300) is used by approaching the tire's sidewall side. Furthermore, since this configuration is installed in the sidewall portion(120), which is separated from the tread portion(110) where impact is directly transmitted, it has the advantage of minimizing the impact transmitted to the tire internal installed device(200).

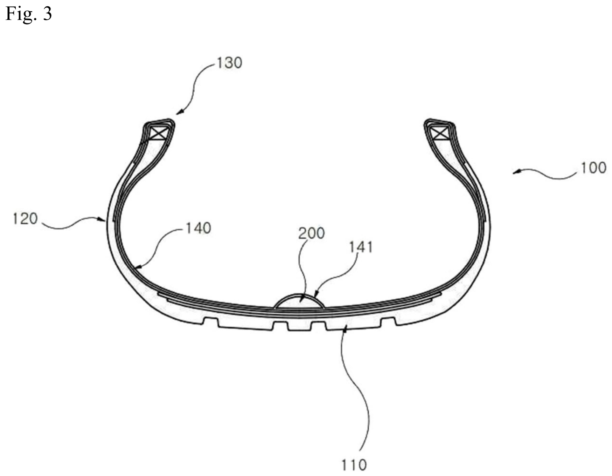

Fig 3 shows an embodiment where the tire internal installed device is inserted into and installed within a pocket(141) of the inner liner(140). In the embodiment of Fig 3, during the tire(100) manufacturing process, a pocket is formed in the inner liner semi-finished product of the green tire before the vulcanization step of the assembled green tire. If the tire internal installed device(200) can operate normally under the temperature and pressure conditions of vulcanization, vulcanizing it together can be expected to provide a more stable bonding structure. For this purpose, it is desirable that the tire internal installed device(200) be manufactured from a silicone-based material or a carbon-based material.

Instead of the configuration described above, where it is integrated with the inner liner, installation using adhesion is also possible.

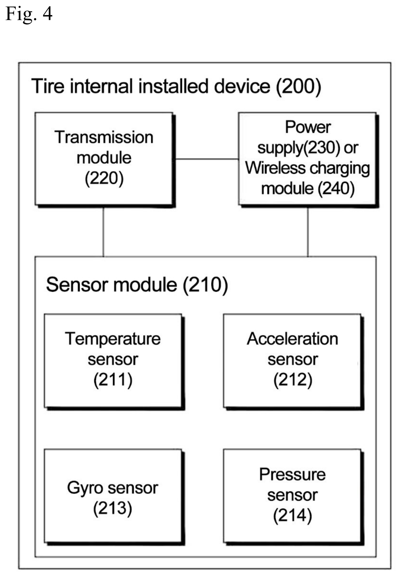

Fig 4 is a schematic diagram illustrating the configuration of one embodiment of the tire internal installed device. As shown in Fig 3, the sensor module(210) of the tire internal installed device(200) includes a temperature sensor(211) for measuring the temperature inside the tire, an acceleration sensor(212) for measuring the acceleration motion of the tire, a gyro sensor(213) for detecting the angular velocity of the tire, and a pressure sensor(214) for measuring the pressure inside the tire.

As vehicle safety devices, it includes an Electronic Stability Control(ESC) system that selectively activates the necessary brakes on the front, rear, left, or right wheels to stabilize the vehicle's posture and even correct driver errors during extreme instability situations such as acceleration, braking, or cornering. It also includes a Tire Pressure Monitoring System(TPMS) that informs the driver of the pressure and temperature information of each tire to improve braking force by enhancing the durability, ride comfort, and braking performance, and the Anti-lock Braking System(ABS) that prevents wheel lockup during braking.(ABS), and a Traction Control System(TCS) that prevents drive wheel slip during sudden acceleration or rapid acceleration. The information collection system for vehicle tires of the present invention can provide information to these vehicle safety devices. Accordingly, the information received by the receiver(300) is sent to the Electronic Stability Control(ESC) system, the Tire Pressure Monitoring System(TPMS), Anti-Lock Brake System(ABS), and Traction Control System(TCS).

The tire internal installed device(200) is an electronic device requiring power. Accordingly, the tire internal installed device(200) may include a power supply(230) internally. Alternatively, in another embodiment, the tire internal installed device(200) may not include an internal power supply and may instead include a wireless charging module(240) capable of charging power from an external magnetic field. As needed, the receiver (300) may be equipped with a charging module to charge the wireless charging module(240). When the receiver (300) is equipped with a charging module, it can supply the necessary power to the tire internal installed device(200) only during information reception, thereby resolving issues such as poor receiving due to power shortage.

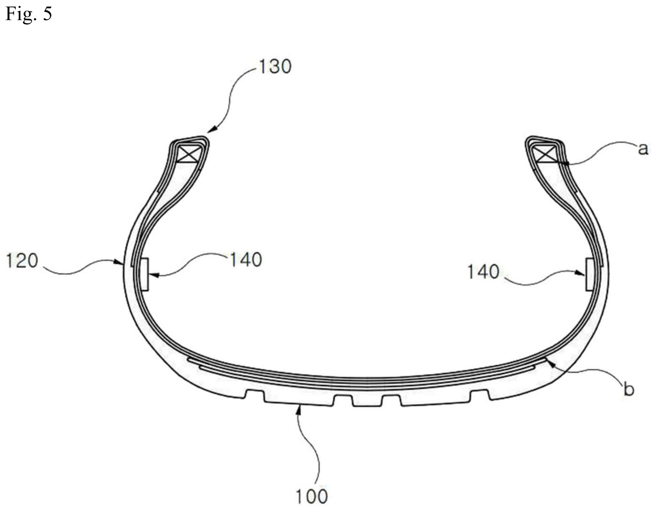

Furthermore, it is desirable for the passive type electronic device to be attached/inserted onto the sidewall for installation. Fig 5 shows the installation position of an electronic device installed on the sidewall. The installation position of the electronic device is preferably located 40 mm from the end of the bead wire(a) and before the start of the second belt end(b), as shown in Fig 5.

More preferably, it is installed within a radius of 40 mm to 60 mm from the center of the bead wire.

The information collection system for vehicle tires according to an embodiment of the present invention described above provides the effect of offering an optimal recognition distance depending on the dielectric constant due to the tire material, the position of the receiver, and the structure of the tire, in the application of the tire internal installed device(200) installed inside the tire.

## Example

When designing electronic devices considering the tire, evaluation confirmed that the frequency changes as follows:

The transmission frequency was designed at 1776 MHz and evaluated, confirming the frequency reduction phenomenon shown in Table 1 below.

[Table 1]

| Transmission Frequency | In Air | Electronic device topped with 2 rubber sheets | Only Electronic device mounted the tire surface | After topping the electronic device, mounted to the tire surface | Tire embedding |
|---|---|---|---|---|---|
| 1776 MHz | 1776 MHz | 1428 MHz | 1180 MHz | 1080 MHz | 1052 MHz |
| 1510 MHz | 1510 MHz | 1214 MHz | 1003 MHz | 918 MHz | 894 MHz |

In the above test, the dielectric constant at the position where the electronic device was embedded in the tire was measured as 2.85. This confirmed the transmission frequency as(1776 MHz) * $1/\sqrt{2.85}$ = 1052 MHz.

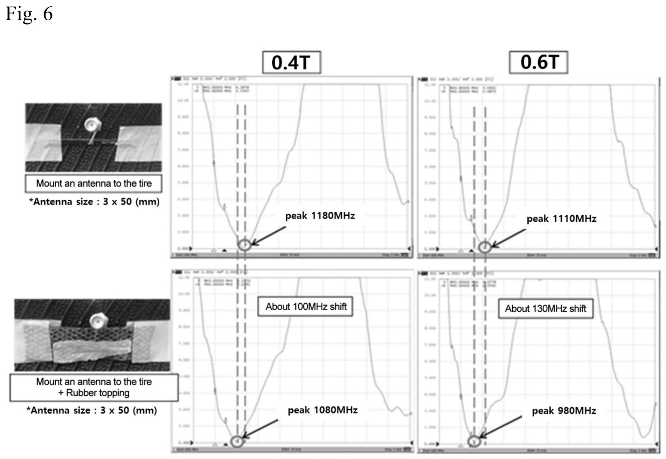

Fig 6 shows a test results measuring frequency shift in an embodiment where an antenna is attached to the tire and in an embodiment where rubber topping is applied after attachment. As can be seen from the graph in Fig 5, the frequency shift in the embodiment with rubber topping was larger, confirming that the change in dielectric constant due to the rubber topping was greater.

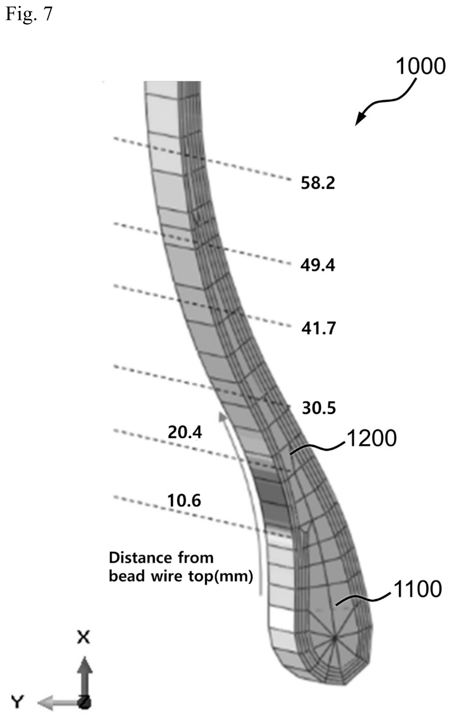

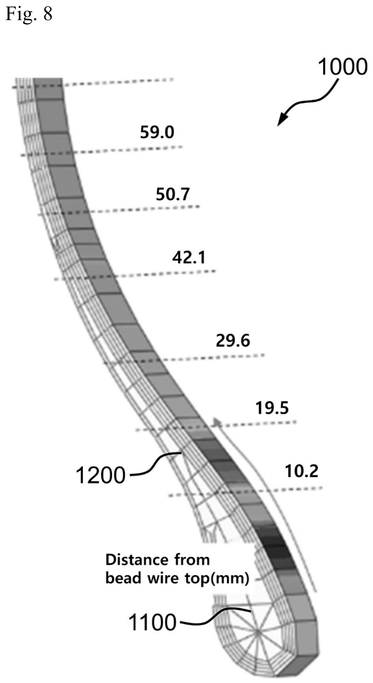

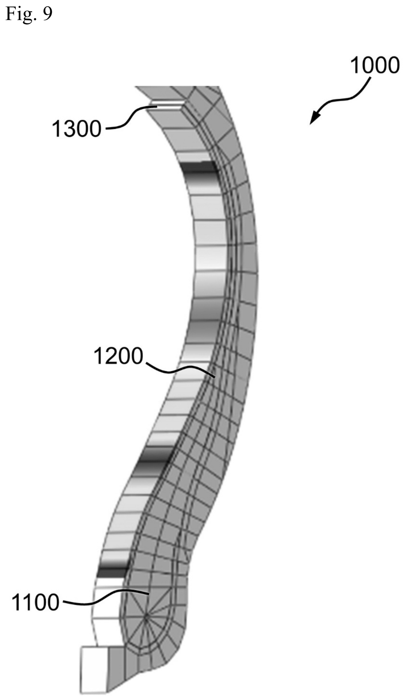

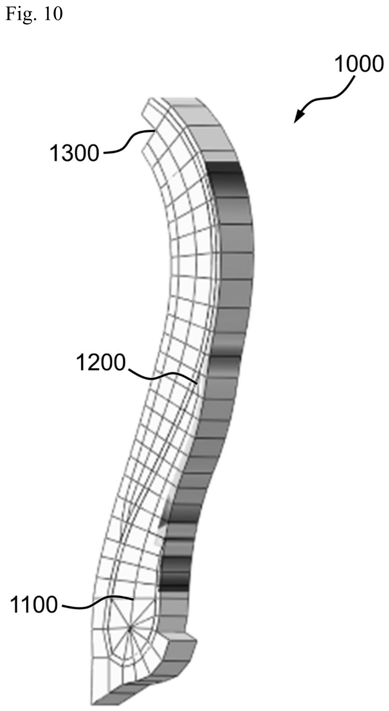

Meanwhile, Figs 7 and 8 show the first point and second point of a tire including an electronic device according to an embodiment of the present invention, Figs 9 and 10 show the first point, second point, and third point of a tire containing an electronic device according to an embodiment of the present invention.

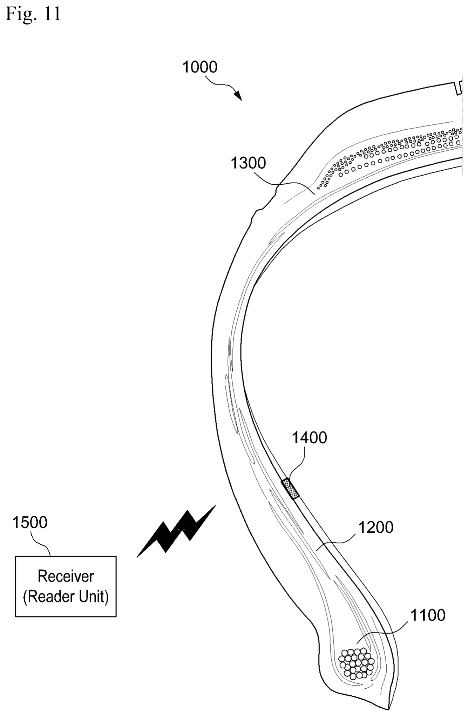

Fig 11 shows a diagram showing the attachment position of the electronic device in a tire according to an embodiment of the present invention.

Referring to Figs 7 through 11, the tire(1000) including the electronic device may be provided with a first point(1100) where the bead wire and the bead wire rubber meet, a second point(1200) where the end portion of the bead filler, and a third point(1300) where the end portion of the carcass and belt.

Furthermore, the electronic device(1400) may be located between the first point(1100) and the second point(1200), or between the second point(1200) and the third point(1300).

Specifically, when the electronic device(1400) is positioned between the first point(1100) and the second point(1200), it may be located at a point corresponding to 10 to 80% of the length from the first point(1100) to the second point(1200).

When the electronic device(1400) is positioned between the second point(1200) and the third point(1300), it may be located at a point corresponding to 15 to 95% of the length from the second point(1200) to the third point(1300).

Alternatively, the electronic device(1400) may be attached or inserted into the sidewall and positioned within the range between the first point(110), which is the end of the bead wire, at a 40mm point, and the third point(1300), which is the end of the second belt.

Furthermore, the electronic device(1400) may be arranged to be located within a radius of 40 mm to 60 mm from the center of the bead wire.

Moreover, the electronic device(1400) may be arranged so as not to be inserted beyond a point corresponding to 1/2 of the entire length of the sidewall from the end of the sidewall.

The position of the electronic device(1400) may also be provided on the inner side of the tread.

The electronic device(1400) may be designed and provided with an electronic chip, an antenna, and a circuit, and may be arranged to transmit information wirelessly using a frequency.

The electronic device(1400) may be attached to the tire(1000) containing the electronic device using an adhesive, or it may be inserted and cured during the molding process to be integrated into the semi-finished tire product.

The electronic device(1400) may be designed such that its transmission frequency is higher than the frequency received externally, taking into account the tire's radio frequency constants, including its dielectric constant.

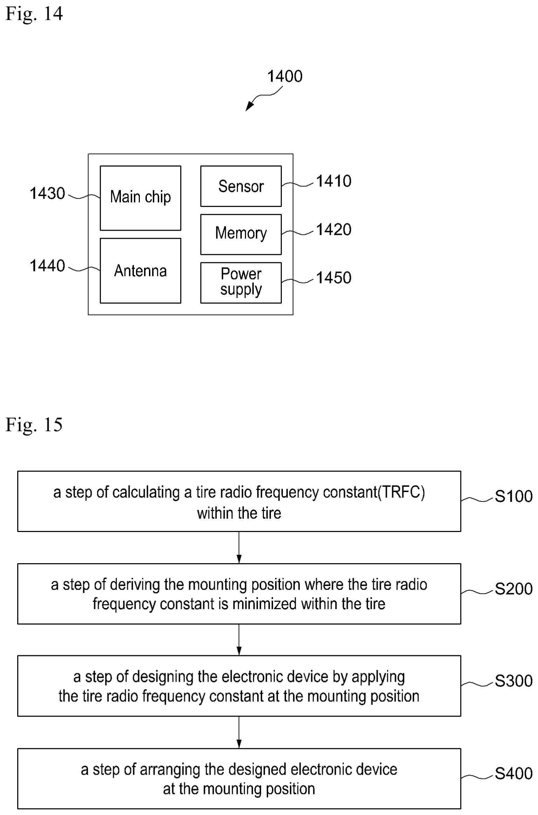

Specifically, referring to Fig 14, an exemplary diagram of an electronic device according to an embodiment of the present invention, the electronic device(1400) may include a sensor(1410), memory(1420), main chip(1430), antenna(1440), and power supply(1450).

The sensor(1410) may collect status information regarding the condition of the tire.

The memory(1420) may store the status information.

The memory(1420) may store the status information along with a tag ID, tire ID, and tire information, and may be arranged with a plurality of storage spaces.

For example, the memory(1420) may comprise a storage space for recording the tire ID with a memory of 256 bits or less, and may include manufacturer, item information, and serial barcode.

Additionally, among the storage spaces, a memory of 2,000 bits or less may be provided for recording additional tire information, and the storage space may be provided to additionally record tire information.

Stored data in the storage space of the memory(1420) may use hexadecimal or binary.

The main chip(1430) may manage the information stored in the memory(1420). Furthermore, the main chip(1430) may transmit information requested from outside, selected from the information stored in the memory(1420), to the outside via the antenna(1440). Additionally, the main chip(1430) may store transmitted information from the outside in the memory(1420).

The antenna(1440) may transmit and receive data unidirectionally or bidirectionally.

The power supply(1450) may supply power to the electronic device(1400) via wired or wireless means.

The shape of the electronic device(1400) is not limited, but may be provided in a shape having at least one side of a polygon. In this case, the electronic device(1400) may be provided in a plate-like configuration, such that the flat portion of the electronic device(1400) is attached in parallel contact with the inner liner. The present invention thus configured can further reduce the risk of damage to the electronic device(1400) and improve attachment stability.

For example, the total length of the electronic device(1400) may be provided within 45 to 75 mm, and its width and thickness may be within 3 mm. Preferably, the width and thickness of the electronic device(1400) may be provided as a sheet-type RFID within 0.4 to 0.6 mm.

A receiver(1500) is provided on the exterior of the tire(1000) and may b transmit and receive data with the electronic device(1400).

The electronic device(1400) and the receiver(1500) may transmit and receive data within a range of at least 1 to 10 cm, but the recognition range is not limited thereto.

Hereinafter, a design method for the transmission frequency of a tire(1000) including the electronic device will be described.

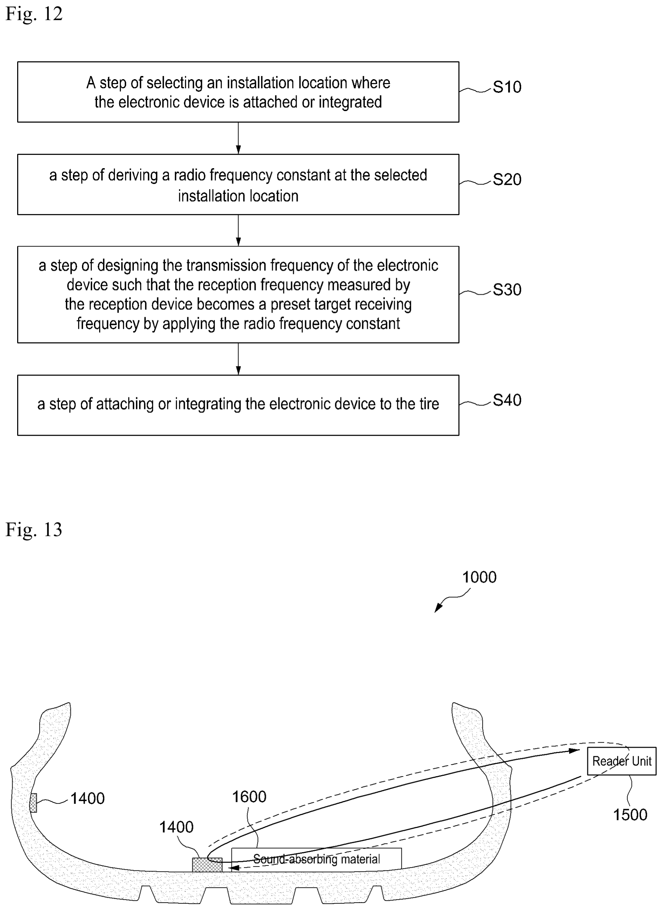

Fig 12 shows a flowchart of the transmission frequency design method for a tire including an electronic device according to an embodiment of the present invention.

Referring to Fig 12, the transmission frequency design method for a tire(1000) including an electronic device comprises: a step(S10) of selecting an installation location where the electronic device is attached or integrated; a step(S20) of deriving a radio frequency constant at the selected installation location, a step(S30) of designing the transmission frequency of the electronic device such that the receiving frequency measured by the receiving device becomes a preset target receiving frequency by applying the radio frequency constant, and a step(S40) of attaching or integrating the electronic device to the tire.

[Table 2]

| State | Transmission Frequency | Receiving frequency |
|---|---|---|
| In Air | 1,776MHz | 1,776 MHz |
| Electronic device topped with 2 rubber sheets | 1,776 MHz | 1,428 MHz |
| Only Electronic device mounted the tire surface | 1,776 MHz | 1,180MHz |
| After topping the electronic device, mounted to the tire surface | 1,776 MHz | 1,080MHz |
| Tire embedding | 1,776 MHz | 1,052 MHz |

[Table 3]

| Status | Transmit Frequency | Receive Frequency |
|---|---|---|
| In Air | 1,510MHz | 1,510 MHz |
| Electronic device topped with 2 rubber sheets | 1,510 MHz | 1,214 MHz |
| Only Electronic device mounted the tire surface | 1,510MHz | 1,003 MHz |
| After topping the electronic device, mounted to the tire surface | 1,510 MHz | 918MHz |
| Tire embedding | 1,510MHz | 894MHz |

Referring to Fig 6, Table 2, and Table 3, it can be confirmed that the receiving frequency decreases depending on the thickness of the semi-finished product.

Furthermore, it can be observed that the receiving frequency decreases relative to the transmitted frequency depending on the location where the electronic device(1400) is installed, the topping conditions, and the embedding conditions within the tire.

Based on these results, it can be concluded that the tire's radio frequency constants, including its dielectric constant, vary depending on material properties, tire structure, semi-finished product arrangement and thickness, and the presence or absence of an air layer.

Furthermore, frequency changes due to rubber topping and antenna thickness(1440) can be observed. Even at the same transmission frequency, the number of objects the signal have to pass through increases the reduction in the receiving frequency relative to the transmitted frequency due to the dielectric constant.

Therefore, the electronic device(1400) and the receiver(1500) can be designed such that the receiving frequency becomes the target receiving frequency, and the transmitted frequency can be designed to be greater than the target receiving frequency.

In the subsequent step(S20) of deriving the tire radio frequency constant at the selected installation location, the step may derive the tire radio frequency constant from the selected installation location to the receiver(1500).

Here, the tire radio frequency constant may use as variables, the semi-finished tire products at the point where the straight line connecting the installation locations of the electronic device(1400) and the receiver(1500) intersects the tire, excluding air.

Specifically, the transmission frequency can be designed by applying the tire radio frequency constant(TRFC) derived using one or more combinations of the dielectric constant, compound composition, thickness, and number of layers of the structures located on the straight line between the electronic device and the receiver as variables.

Furthermore, one or more rubbers, one or more carcasses, and polymers for the tire composition may be included.

That is, it may derive the tire radio frequency constant based on obstacles located between the electronic device(1400) and the receiver (1500).

Specifically, the tire radio frequency constant may be derived based on the sidewall compound, the sidewall thickness, the carcass cord material, the carcass cord compound, the thickness of the carcass cord, the number of layers of the carcass cord, the compound of the bead filler, the thickness of the bead filler, the compound of the rim cushion, the thickness of the rim cushion, the compound of the inner liner, and the thickness of the inner liner.

More specifically, the tire's radio frequency constant can be calculated using the following Equation 1.

<Equation 1>

$$TRFC = \alpha\sqrt{(SWC \times SWT)} + \beta\sqrt{(CCM \times CCC \times CCT \times CCN)} + \gamma\sqrt{(BFC \times BFT)} + \delta\sqrt{(RCC \times RCT)} + \varepsilon\sqrt{(ILC \times ILT)}$$

Where SWC is the sidewall compound coefficient, SWT is the sidewall thickness coefficient, $\alpha$ is the sidewall correction coefficient, CCM is the material coefficient of the carcass cord, CCC is the compound coefficient of the carcass cord, CCT is the thickness coefficient of the carcass cord, CCN is the number of overlaps of the carcass cord, $\beta$ is the correction coefficient of the carcass cord, BFC is the compound coefficient of the bead filler, BFT is the thickness coefficient of the bead filler, $\gamma$ is the correction coefficient of the bead filler, RCC denotes the rim cushion compound coefficient, RCT denotes the rim cushion thickness coefficient, $\delta$ denotes the rim cushion correction coefficient, ILC denotes the inner liner compound coefficient, ILT denotes the inner liner thickness coefficient, and $\varepsilon$ denotes the inner liner correction coefficient.

Specifically, each variable is described as follows: SWC is the sidewall compound coefficient, which can be set within the range of 0 to 10. It can be configured to adjust in basic increments of 0.1 based on the blend ratio of natural rubber, synthetic rubber, and other polymers in the sidewall.

SWT is the sidewall thickness coefficient, which can be set within the range of 0 to 1. It can be configured to adjust the sidewall thickness in 0.1 increments, ranging from 2 to 100 mm.

$\alpha$ is the sidewall correction coefficient, which can be determined within the range of 0 to 1 based on the sidewall shape. Typically, it can be set to a value of 0.7.

CCM is the material coefficient of the carcass cord, which can be set within the range of 0 to 5. The material coefficient of the carcass cord can be adjusted according to the material of the carcass cord, such as nylon or steel.

CCC is the compound coefficient of the carcass cord, which can be set within the range of 0 to 5. Furthermore, the compound coefficient of the carcass cord can be set to be determined based on the material of the carcass topping compound.

CCT is the thickness coefficient of the carcass cord, which can be set within the range of 0 to 1, differentiated based on the thickness of the carcass cord.

CCN is the number of layers of the carcass cord, which can be set within the range of 0 to 50. It can be classified based on how many layers of the carcass exist from the outer surface of the sidewall to the electronic device(1400).

$\beta$ is the correction coefficient for the carcass cord, which can be set within the range of 0 to 0.2 based on the shape of the carcass cord and is typically set to 0.1.

BFC is the compound factor of the bead filler, which can be adjusted in increments of 0.1 according to the rubber compound ratio and can be set within the range of 0 to 5.

BFT is the thickness coefficient of the bead filler, which can be set within the range of 0 to 1 depending on the thickness of the bead filler.

$\gamma$ is the correction coefficient for the bead filler, which can be set within the range of 0 to 0.5 depending on the shape of the bead filler and is typically set to 0.2.

RCC is the compound coefficient of the rim cushion, adjusted in increments of 0.1 based on the rubber compound ratio, and can be set within the range of 0 to 10.

RCT is the rim cushion thickness coefficient, adjusted according to the rim cushion thickness and can be set within the range of 0 to 1.

$\delta$ is the rim cushion correction coefficient, set within the range of 0 to 0.8 based on the rim cushion shape, and is typically set to 0.1.

ILC is the compound coefficient of the inner liner, which can be adjusted in increments of 0.1 based on the type and number of inner liners, and can be set within the range of 0 to 10.

ILT is the thickness coefficient of the inner liner, which can be set within the range of 0 to 1 depending on the thickness of the inner liner.

$\varepsilon$ is the inner liner correction coefficient, which can be set within the range of 0 to 0.2 depending on the inner liner shape and is typically set to 0.1.

Once the tire is designed, each correction coefficient($\alpha$, $\beta$, $\gamma$, $\delta$, $\varepsilon$) is determined within the specified range and can be set to maintain the same value until the tire structure is changed.

Furthermore, each correction coefficient($\alpha$, $\beta$, $\gamma$, $\delta$, $\varepsilon$) can be arranged such that when the electronic device(1400) is located between the second point(1200) and the third point(1300), it becomes at least 1.5 times larger than its initial set value.

Next, in step(S30) where the transmission frequency of the electronic device is designed such that the receiving frequency measured by the receiver becomes the preset target receiving frequency by applying the radio frequency constant, the tire radio frequency constant calculated in this manner can be multiplied by the target receiving frequency to obtain the transmission frequency of the electronic device(1400) required for the design.

For example, the electronic device(1400) may be designed to derive the transmission frequency by multiplying the tire radio frequency constant by the target receiving frequency, which is the intended receiving frequency, and to operate at this transmission frequency.

For this purpose, the electronic device(1400) may be arranged such that the electronic chip, antenna, and circuitry are designed to have the designed transmission frequency.

Meanwhile, the receiver(1500) may further determine whether the receiving frequency falls within the target receiving frequency and a preset error range, thereby selecting information.

Specifically, the receiver(1500) may compare whether the receiving frequency, when received, falls within the target receiving frequency and a preset error range.

That is, the receiver(1500) may obtain only information corresponding to a receiving frequency within the preset error range, analyze it, and provide the necessary information to the user.

The present invention can minimize the possibility of information modulation due to frequency, thereby further improving the reliability of the information provided to the user.

The present invention can minimize the possibility of information modulation due to frequency, thereby further improving the reliability of the information provided to the user.

Alternatively, the receiver(1500) may provide a malfunction notification to the user if the receiving frequency does not continuously fall within the preset error range relative to the target receiving frequency for a preset period.

Next, in the step(S40) of attaching or integrating the electronic device to the tire, the electronic device(1400) designed to have the designed transmission frequency may be attached or integrated to the tire.

Specifically, the electronic device(1400) may be attached to the tire(1000) using an adhesive, incorporating an electronic device whose transmission frequency is designed considering the tire's radio frequency constant. Alternatively, it may be provided to be inserted and cured during the molding process to be integrated into the semi-finished tire product.

As described above, the present invention provides an optimal recognition distance because it designs the transmission frequency of the electronic device considering the tire's radio frequency constant, which reflects the permittivity based on the desired reading location, tire structure, material, etc.

Specifically, the present invention can be arranged such that the electronic device(1400) embedded in the tire can transmit and receive data from a distance of 1 mm to 1,500 mm from the tire surface. Furthermore, the present invention ensures that information is not modulated as long as the receiving frequency value falls within the error range of the target receiving frequency value, thereby enhancing the reliability of the information.

Furthermore, the tire radio frequency constant can be derived by additionally including the correction coefficient for objects surrounding the sensor(1410) and the sensor correction coefficient.

The tire radio frequency constant calculated in this manner can be product by the target receiving frequency to obtain the transmission frequency required for the design.

Moreover, the electronic device(1400) may be positioned where the tire radio frequency constant is minimized, and the main chip(1430) and associated circuitry may be designed to obtain the set transmission frequency at this position.

For example, if the tire RF constant is calculated as 1.69, and the target receiving frequency is 1,052 MHz, the electronic device(1400) can be designed such that the transmit frequency is 1,776 MHz, which is the product of 1.69 and 1,052.

The receiving frequency band of the tire electronic device(1400) may be set to 860 to 800 MHz, and the optimal frequency may be set to 894 MHz, but this is not limited thereto.

Meanwhile, the transmission frequency may be designed to be at least 1.05 times or at most 0.95 times the target receiving frequency.

The electronic device(1400) may be provided inside the tire(1000) by any one of attachment, adhesion, insertion, or integration.

Furthermore, an additional sound-absorbing material(1600) may be provided on the inner side of the tread.

When such sound-absorbing material(1600) is additionally provided, since its dielectric constant is 3 to 4 times higher than that of a typical tire, the tire's radio frequency constant may be calculated taking this into further consideration.

Referring to Fig 15, a method for manufacturing a tire including an electronic device comprises: a step(S100) of calculating a tire radio frequency constant(TRFC) within the tire ; a step(S200) of deriving the mounting position where the tire radio frequency constant is minimized within the tire, a step(S300) of designing the electronic device by applying the tire radio frequency constant at the mounting position, and a step(S400) of arranging the designed electronic device at the mounting position.

In the step(S100) of calculating the tire radio frequency constant(TRFC) inside the tire, the tire radio frequency constant is a constant calculated based on objects having a dielectric constant located between the electronic device(1400) and the receiver(1500) when the electronic device(1400) and the receiver(1500) are connected in a straight line.

This tire radio frequency constant is influenced by the sidewall compound, the sidewall thickness, the carcass cord material, the carcass cord compound, the thickness of the carcass cord, the number of carcass cord layers, the compound of the bead filler, the thickness of the bead filler, the compound of the rim cushion, the thickness of the rim cushion, the compound of the inner liner, and the thickness of the inner liner.

Then, in the step(S100) where the tire radio frequency constant(TRFC) inside the tire is calculated, the tire radio frequency constant is calculated based on the sidewall compound, sidewall thickness, carcass cord material, carcass cord compound, cascade thickness, cascade layer count, bead filler compound, bead filler thickness, rim cushion compound, rim cushion thickness, inner liner compound, and inner liner thickness as variables.

Next, in step(S200) where the mounting position where the tire radio frequency constant is minimized within the tire is derived, the mounting position can be derived as the position where the tire radio frequency constant is minimized between the first point(1100) and the third point(1300).

More specifically, when the point where the bead wire and bead wire rubber meet is designated as the first point(1100), the point at the end of the bead filler is designated as the second point(1200), and the point at the end of the carcass and belt is designated as the third point(1300), if located between the first point(1100) and the second point(1200), it is derived as the point where the tire's radio frequency constant is minimized, within a range of 10 to 80% of the length from the first point(1100) to the second point(1200). When located between the second point(1200) and the third point(1300), it can be derived as the point where the tire radio frequency constant is minimized among points within 15 to 95% of the length from the second point(1200) to the third point(1300).

Next, in the step(S300) of designing an electronic device applying the tire radio frequency constant at the mounting position, an electronic device(1400) transmitting a transmission frequency that enables the receiving end to have a target receiving frequency can be provided. To this end, the transmission frequency may be derived by multiplying the tire RF constant at the mounting position-where the tire RF constant is minimized-by the target receiving frequency.

Next, in the step(S400) of providing the designed electronic device at the mounting position, the electronic device(1400) may be provided to be molded and integrated while located inside the tire(1000) or attached inside the tire(1000).

Specifically, the electronic device(1400) may be provided to be molded and integrated with the tire(1000) by being topped with a rubber patch made of the same material as the inner liner while mounted inside the tire(1000). However, the electronic device(1400) may also be attached independently inside the tire(1000) without a rubber topping.

Although the present invention was described with reference to limited drawings, the above description is provided as an exemplary example of the present invention, and it should be understood that the present invention may be easily modified in other various ways without changing the spirit or the necessary features of the present invention by those skilled in the art. Therefore, the examples described above are only exemplary and should not be construed as being limitative in all respects. For example, the components described as single parts may be divided and the components described as separate parts may be integrated. Further, the techniques described above may be performed in a different order from the described method.

The embodiments described herein and the accompanying drawings merely illustrate some of the technical ideas included in the present invention. Therefore, the scope of the present invention is defined by the appended claims, and all modifications or variations derived from the meaning and scope of the claims and their equivalents should be interpreted as falling within the scope of the present invention.

<Reference Signs>

100: Tire
110: Tread portion
120: Sidewall portion
130: Bead portion
140: Inner liner
200: Tire Internal Installed Device
210: Sensor Module
211: Temperature Sensor
212: Acceleration sensor
213: Gyro Sensor
214: Pressure Sensor
220: Transmission Module
230: Power Supply

240: Wireless Charging Module
300: Receiver
1000: Tire including electronic device
1100: First point
1200: Second point
1300: Third Point
1400: Electronic device
1410: Sensor
1420: Memory
1430: Main chip
1440: Antenna
1450: Power supply
1500: Receiver(Reading Unit)
1600: Sound-absorbing material

**Claims**

1. A tire including an electronic device, comprising:

   an electronic device provided inside a tire; and
   a receiver provided on the outside of the tire,
   wherein the electronic device comprises a sensor module to collect tire information and a transmission module to transmit collected information from the sensor module,
   wherein the transmission frequency of the transmission module is designed such that the reception frequency of the receiver becomes a target receiving frequency,
   wherein the transmission frequency is designed to be greater than the target receiving frequency.

2. A tire including an electronic device of claim 1,
   the transmission frequency is designed by applying a tire radio frequency constant(TRFC) derived by varying one or more combinations of the dielectric constant, compound composition, thickness, and number of layers of structures positioned in a straight line between the electronic device and the receiver.

3. A tire including an electronic device of claim 2,
   the tire radio frequency constant(TRFC) is derived by applying one or more variables from a sidewall compound, a sidewall thickness, a carcass cord material, a carcass cord compound, a thickness of the carcass cord, a number of layers of the carcass cord, a compound of the bead filler, a thickness of the bead filler, a compound of the rim cushion, a thickness of the rim cushion, a compound of the inner liner, and a thickness of the inner liner.

4. A tire including an electronic device of claim 2,
   the tire radio frequency constant(TRFC) is derived by including a correction coefficient of the object surrounding the sensor and a sensor correction coefficient.

5. A tire including an electronic device of claim 2,
   the transmission frequency is designed as multiplied value of the product of the target receiving frequency and the derived tire radio frequency constant.

6. A tire including an electronic device of claim 1,
   the transmission frequency of the transmission module is set to be 1.2 to 2 times higher than the receiving frequency of the receiver.

7. A tire including an electronic device of claim 1,

   the electronic device is installed on the inner side corresponding to the tread portion of the tire, and
   the receiver is formed on the tire upward on the ground surface.

8. A tire including an electronic device of claim 1,
   the electronic device is installed on the inner side corresponding to both sidewall portions of the tire.

9. A tire including an electronic device of claim 7 or claim 8,
a recognized range of a signal transmitted from the transmission module of the electronic device to the receiver is 1 mm to 1500 mm.

10. A tire including an electronic device of claim 8,
the electronic device is installed in the sidewall portion between the bead wire end(a) at 40 mm and the second belt end(b) at the sidewall.

11. A tire including an electronic device of claim 1,
the sensor module of the electronic device includes one or more sensors selected from a temperature sensor for measuring the temperature inside the tire, an acceleration sensor for measuring the acceleration motion of the tire, a gyro sensor for detecting the angular velocity of the tire, and a pressure sensor for measuring the pressure inside the tire.

12. A tire including an electronic device of claim 11,
an electronic device further includes a power supply inside the tire.

13. A tire including an electronic device of claim 11,
the electronic device further includes a wireless charging module to charge power from an external magnetic field.

14. A tire including an electronic device of claim 1,

the electronic device has a first point where the bead wire and bead wire rubber meet, a second point where at the end of the bead filler, and a third point where at the end of the carcass and belt,
the electronic device is positioned between the first point and the second point or between the second point and the third point,
the electronic device is designed with a transmission frequency that varies as a radio frequency constant of the tire.

15. A tire including an electronic device of claim 14,

when the electronic device is positioned between the first point and the second point,
the electronic device is positioned at a point corresponding to 10 to 80 % of the length from the first point to the second point.

16. A tire including an electronic device of claim 14,

when the electronic device is positioned between the second point and the third point,
the electronic device is positioned at a point corresponding to 15 to 95 % of the length from the second point to the third point.

Fig. 1

Fig. 2

Fig. 3

Fig. 4

Tire internal installed device (200)

Transmission module (220)

Power supply(230) or Wireless charging module (240)

Sensor module (210)

Temperature sensor (211)

Acceleration sensor (212)

Gyro sensor (213)

Pressure sensor (214)

Fig. 5

Fig. 6

Fig. 7

Fig. 8

Fig. 9

1000

1300

1200

1100

Fig. 10

Fig. 11

1000

1300

1400

1500

1200

1100

Receiver
(Reader Unit)

Fig. 12

| A step of selecting an installation location where the electronic device is attached or integrated | ⌐S10 |

↓

| a step of deriving a radio frequency constant at the selected installation location | ⌐S20 |

↓

| a step of designing the transmission frequency of the electronic device such that the reception frequency measured by the reception device becomes a preset target receiving frequency by applying the radio frequency constant | ⌐S30 |

↓

| a step of attaching or integrating the electronic device to the tire | ⌐S40 |

Fig. 13

1000

1400

1600

1400

Reader Unit

1500

Sound-absorbing material

Fig. 14

1400

1430 — Main chip

Sensor — 1410

Memory — 1420

1440 — Antenna

Power supply — 1450

Fig. 15

| |
| --- |
| a step of calculating a tire radio frequency constant(TRFC) within the tire |

S100

| |
| --- |
| a step of deriving the mounting position where the tire radio frequency constant is minimized within the tire |

S200

| |
| --- |
| a step of designing the electronic device by applying the tire radio frequency constant at the mounting position |

S300

| |
| --- |
| a step of arranging the designed electronic device at the mounting position |

S400

## INTERNATIONAL SEARCH REPORT

| International application No. |
|---|
| **PCT/KR2024/008977** |

| A. | CLASSIFICATION OF SUBJECT MATTER |
|---|---|

**B60C 23/04**(2006.01)i; **H04B 1/3822**(2015.01)i; **G06K 19/077**(2006.01)i; **H01Q 1/22**(2006.01)i; **H01Q 1/40**(2006.01)i; **H02J 50/10**(2016.01)i

According to International Patent Classification (IPC) or to both national classification and IPC

| B. | FIELDS SEARCHED |
|---|---|

Minimum documentation searched (classification system followed by classification symbols)

B60C 23/04(2006.01); B60C 19/00(2006.01); B60C 23/02(2006.01); B60C 23/20(2006.01); G08C 17/02(2006.01); H04Q 5/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이어(tire), 센서(sensor), 통신(communication), 송신 주파수(transmission frequency), 목표(target), 변수(variable)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2007-141071 A (BRIDGESTONE CORP.) 07 June 2007 (2007-06-07)<br>See paragraphs [0013]-[0019] and figures 1-4. | 1-16 |
| Y | JP 2006-015792 A (ALPS ELECTRIC CO., LTD.) 19 January 2006 (2006-01-19)<br>See paragraphs [0015]-[0017] and [0020]-[0022] and figures 1 and 2. | 1-16 |
| Y | US 2011-0148593 A1 (BENEDICT et al.) 23 June 2011 (2011-06-23)<br>See paragraphs [0025]-[0027] and figures 4A-5. | 7,9 |
| A | EP 1352763 B1 (PACIFIC INDUSTRIAL CO., LTD.) 16 April 2008 (2008-04-16)<br>See claims 1-3 and figures 1 and 2. | 1-16 |
| A | JP 2008-094339 A (BRIDGESTONE CORP.) 24 April 2008 (2008-04-24)<br>See claims 1 and 2 and figures 1 and 2. | 1-16 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 September 2024** | **30 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008977**

| Patent document cited in search report | | | Publication date (day/month/year) | Patent family member(s) | | | Publication date (day/month/year) |
|---|---|---|---|---|---|---|---|
| JP | 2007-141071 | A | 07 June 2007 | JP | 4810197 | B2 | 09 November 2011 |
| JP | 2006-015792 | A | 19 January 2006 | JP | 4522765 | B2 | 11 August 2010 |
| US | 2011-0148593 | A1 | 23 June 2011 | BR | PI1005704 | A2 | 02 April 2013 |
| | | | | BR | PI1005707 | A2 | 02 April 2013 |
| | | | | BR | PI1005707 | B1 | 15 December 2020 |
| | | | | EP | 2339692 | A1 | 29 June 2011 |
| | | | | EP | 2339692 | B1 | 14 November 2012 |
| | | | | US | 2011-0148592 | A1 | 23 June 2011 |
| | | | | US | 9135479 | B2 | 15 September 2015 |
| EP | 1352763 | B1 | 16 April 2008 | DE | 60320342 | T2 | 20 May 2009 |
| | | | | EP | 1352763 | A2 | 15 October 2003 |
| | | | | EP | 1352763 | A3 | 03 December 2003 |
| | | | | JP | 2003-303388 | A | 24 October 2003 |
| | | | | US | 2003-0193392 | A1 | 16 October 2003 |
| | | | | US | 6937145 | B2 | 30 August 2005 |
| JP | 2008-094339 | A | 24 April 2008 | None | | | |

Form PCT/ISA/210 (patent family annex) (July 2022)

**REFERENCES CITED IN THE DESCRIPTION**

**Patent documents cited in the description**

- KR 101500213
- KR 101435409
- WO 101500213 A
- WO 101435409 A
- US 7319380 B